# EUROPÄISCHE PATENTSCHRIFT

(11) **EP 1 337 388 B1**
(45) Veröffentlichungstag und Bekanntmachung des Hinweises auf die Patenterteilung: **21.07.2004**
(21) Anmeldenummer: 01987707.5
(22) Anmeldetag: 16.10.2001
(51) Int. Cl.: B29C 45/17, B29C 45/26

(54) **VORRICHTUNG ZUR AUTOMATISCHEN UND GLEICHZEITIGEN KOMPENSATION EINES WINKELFEHLERS UND EINES ACHSVERSATZES BEI EINER SCHLIESSEINHEIT EINER SPRITZGIESSMASCHINE**
DEVICE FOR AUTOMATIC AND SIMULTANEOUS COMPENSATION OF AN ANGLE ERROR AND AN AXIS MISALIGNMENT IN THE CLOSING UNIT OF AN INJECTION MOLDING MACHINE
DISPOSITIF DE COMPENSATION AUTOMATIQUE ET SIMULTANEE D'UNE ERREUR ANGULAIRE ET D'UN DECALAGE D'AXE SUR UNE UNITE DE FERMETURE D'UNE MACHINE DE MOULAGE PAR INJECTION

(30) Priorität: 19.10.2000 DE 10051838
(43) Veröffentlichungstag der Anmeldung: 27.08.2003
(73) Patentinhaber: Krauss-Maffei Kunststofftechnik GmbH, 80997 München (DE)
(72) Erfinder: HECHTL, Wolfgang, 80798 München (DE)
(74) Vertreter: Wilhelm, Ludwig
(86) Internationale Anmeldenummer: PCT/EP2001/011948
(87) Internationale Veröffentlichungsnummer: WO 2002/032645

(56) Entgegenhaltungen:
- DE-A- 19 511 808
- DE-U- 9 409 135
- US-A- 5 780 068
- US-A- 5 800 843
- PATENT ABSTRACTS OF JAPAN vol. 1998, no. 13, 30. November 1998 (1998-11-30) & JP 10 217302 A (TOSHIBA MACH CO LTD), 18. August 1998 (1998-08-18)

## Beschreibung

Die Erfindung betrifft eine Vorrichtung zur automatischen und gleichzeitigen Kompensation eines Winkelfehlers und eines Achsversatzes bei einer Schließeinheit einer Spritzgießmaschine gemäß dem Oberbegriff von Patentanspruch 1.

Bei der aus der DE 20 28 009 A bekannten Vorrichtung sind zwischen einer Formhälfte und einem als Formaufspannplatte dienenden Schwenkarm zwei flexible Platten vorgesehen, die an ihren Rändern dichtend miteinander verbunden sind und deren eingeschlossener Hohlraum über einen geeigneten Anschluss mit einem Druckmedium beaufschlagbar ist. Die beiden flexiblen Platten stützen sich mit ihrer Außenfläche gegen zwei feste Platten ab, von denen die eine an einem die Formhälfte tragenden Formhälftenlager und die andere an einem auf dem Schwenkarm befestigten Träger anliegt. Dieser Träger verfügt über lotrecht nach außen weisende Stege, die von passenden lotrecht nach innen weisenden Stegen des Formhälftenlagers hintergriffen werden. Bei Beaufschlagung des Hohlraums mit dem Druckmedium werden die lotrechten Stege des Formhälftenlagers fest gegen die Gegenstege des schwenkarmseitigen Trägers angepresst. Etwaige Parallelitätsverschiebungen der miteinander korrespondierenden Formhälften werden unmittelbar von den Platten durch Verdrängung des Druckmediums aufgenommen. Mittels geeigneter Distanzplatten zwischen den lotrecht nach innen weisenden Stegen des Formhälftenlagers und der diesen gegenüberliegenden Außenfläche des Trägers kann die auf dem Schwenkarm befestigte Formhälfte gegenüber der anderen Formhälfte genau axial fluchtend ausgerichtet werden. Nachteilig an dieser Ausgleichsvorrichtung ist zum einen der Aufwand zum Abdichten des Hohlraums und zum anderen ist es erforderlich, eine Anschlussmöglichkeit vorzusehen, um das Druckmedium aus einem Vorratsbehälter zuzuführen. Ferner ist das axiale Ausrichten nur manuell durch den Austausch der Distanzplatten möglich. Ein automatisches axiales Ausrichten ist mit dieser Vorrichtung nicht möglich.

Um die mit einem flüssigen Druckmedium einhergehenden Probleme zu vermeiden, ist es weiterhin bekannt (DE 196 09 568 C2), eine Vielzahl von Stahlkugeln zwei- oder mehrlagig in einer mittels einer Druckausgleichsplatte abgeschlossenen Kammer unter Vorspannung einzuschließen, wobei die Druckausgleichsplatte und die Kammer sich jeweils gegen anliegende, druckbeaufschlagt Maschinenteile abstützen, derart, dass bei Druck-Beaufschlagung der Maschinenteile die Druckausgleichsplatte sich jeweils so einstellt, dass über ihre gesamte Fläche immer der gleiche spezifische Druck vorhanden ist. Damit sich die Kugeln in der Kammer leicht umverteilen und sich den durch Verkantungen bedingten Volumenänderungen gut anpassen können, wird Trockengraphit hinzugegeben. Nachteilig an dieser Ausgleichsvorrichtung ist, dass Kugeln generell Punktberührung haben, d.h. nur eine geringe Flächenpressung ist gegeben. Mit den Kugeln muss daher eine wesentlich größere Fläche beaufschlagt werden als für die Flächenpressung erforderlich ist. Beim Schließkraftaufbau werden die Kugeln ineinander gedrückt und drücken sich zusätzlich in die Oberfläche der Kammer. Beim Öffnen und Schließen des Werkzeugs tritt außerdem ein Pumpeffekt durch Umverteilung der Kugeln auf, der einen erhöhten Verschleiß für die Kugeln bedeutet. Daher ist die auch Formeinbauhöhe nicht exakt bestimmbar. Insgesamt leidet durch diese Unzulänglichkeiten die Exaktheit des Winkelversatzausgleichs sowie die Erhaltung dieser Exaktheit während des Betriebs. Zum Spritzprägen ist diese Vorrichtung generell nicht geeignet, da der Prägehub nicht exakt einstellbar ist. Außerdem ist ein automatisches axiales Ausrichten bei dieser Vorrichtung nicht vorgesehen.

Es ist weiterhin bekannt (DE 195 11 808 C2), bei einer holmlosen Formschließeinrichtung die bei der Schfießkrafteinwirkung auftretenden Verformungen des C-förmigen Maschinenrahmens auf der Seite der beweglichen Formaufspannplatte dadurch auszugleichen, dass die Kolbenstange eines Arbeitszylinders mit der beweglichen Formaufspannplatte über ein als Kalottenlager ausgebildetes Gelenk verbunden wird. Die Kolbenstange des Arbeitszylinders besitzt am Ende eine Ringnut, an die sich stirnseitig ein sphärischer Gelenkkopf anschließt. In der beweglichen Werkzeugaufspannplatte befindet sich eine passende kalottenförmige Ausnehmung. Der sphärische Gelenkkopf der Kolbenstange des Arbeitszylinders liegt an der kalottenförmigen Ausnehmung an, ist darin drehbeweglich und ist durch einen geteilten Ringflansch und eine Schraubverbindung mit der beweglichen Formaufspannplatte lösbar verbunden. Auf diese Weise kann sich die bewegliche Formaufspannplatte gegenüber der Kolbenstange und damit gegenüber dem Maschinenrahmen so verkippen und ausrichten, dass die beide Formaufspannplatten und die darauf aufgespannten Formhälften trotz der Verformung des Maschinenrahmens parallel ausgerichtet bleiben. Nachteilig an dieser Ausgleichsvorrichtung ist, dass der Gelenkkopf nicht gegen die Pfanne vorgespannt ist und somit zusätzliche Maßnahmen zum Abstützen und Führen der Formaufspannplatte erforderlich sind, damit die Form nicht abkippt. Beim Zufahren der Schließeinheit spielt die fehlende Vorspannung zwar keine Rolle. Für die Ausführung eines exakten Prägehubs ist es jedoch erforderlich, die Prägestartposition exakt anzufahren. Hierfür muss die bewegliche Formaufspannplatte kurz vor der Prägestartposition abgebremst werden. Aufgrund der fehlenden Vorspannung in dem Kalottenlager rutscht die bewegliche Formaufspannplatte aufgrund der Massenträgheit etwas nach vorn und zwar um den für die Kippbewegung vorgesehenen Spalt zwischen dem Ringflansch und dem Gelenkkopf. Aufgrund dieses Spiels ist kein exakter Prägehub einstellbar, so dass diese Einrichtung für das Spritzprägen wenig geeignet ist. Ferner ist bei dieser Anordnung ein axiales Ausrichten nicht vorgesehen.

Weitere Schließeinrichtungen sind aus der JP-A-10217302 und der DE-U-9 409 135 bekannt.

Demgegenüber liegt der Erfindung die Aufgabe zugrunde, eine Vorrichtung anzugeben, mit der bei einer Schließeinheit einer Spritzgießmaschine automatisch und simultan ein Winkelfehler und ein Achsversatz präzise kompensiert werden können, so dass die Formhälften stets genau axial fluchten und exakt planparallel zueinander ausgerichtet bleiben.

Die Lösung dieser Aufgabe erfolgt bei einer Vorrichtung mit den Merkmalen von Patentanspruch 1. Vorteilhafte Weiterentwicklungen und Ausgestaltungen finden sich in den Unteransprüchen 2 bis 11.

Der Hauptvorteil der vorliegenden Erfindung liegt darin, dass gleichzeitig ein Winkelfehler und ein Achsversatz in der Schließeinheit automatisch nach dem ersten Auftreten des Fehlers beim nächsten Schließvorgang kompensiert werden. Hierzu wird erfindungsgemäß vorgesehen, dass zum einen die eine Formhälfte auf einem Formhälftenträger lotrecht zur Symmetrieachse der Schließeinheit verschiebbar vorgespannt ist, dass zum anderen dieser Formhälftenträger seinerseits gegenüber der ihm zugeordneten Formaufspannplatte mit einem Kalottenlager gelagert ist und mit einem Spalt gegenüber dieser Formaufspannplatte unter Vorspannung gehalten wird, und dass schließlich auf einer Formhälfte ein Zentrierring mit einer konusförmigen Ausnehmung und auf der anderen Formhälfte ein Zentrierring mit einem Zentrierung vorgesehen sind. Durch das Zusammenwirken des Zentrierkonus mit der passenden konusförmigen Vertiefung werden die gegeneinander vorgespannten Teile automatisch ausgerichtet, d.h sowohl ein Winkelfehler als auch ein Achsversatz werden automatisch und gleichzeitig kompensiert.

Wenn darüber hinaus die Vorspannmittel für die Formträgerplatte mit kalottenartigen Andrückstücken ausgestattet sind, die in passenden Vertiefungen liegen und beide Elemente zusammen mit dem Kalottenlager auf dem gleichen Radius liegen (Unteransprüche 2 bis 5), bleibt auch bei Verkippungen der Formträgerplatte gegenüber der Nullposition die Vorspannkraft stets gleich.

Die Ausgestaltung mit einem axial verschiebbaren und auf einen vorgebbaren Prägehub einstellbaren Zentrierring gemäß den Unteransprüchen 7 bis 9 ist speziell für das Spritzprägen geeignet, bei dem plastifizierter Kunststoff in eine gegenüber der eigentlichen Formteilgröße vorvergrößerte Kavität eingespritzt wird und die Kavität durch Ausführung eines Prägehubs auf die eigentliche Formteilgröße reduziert wird.

Nachfolgend soll die Erfindung anhand eines Ausführungsbeispiels und unter Bezugnahme auf die Figuren 1 bis 7 näher erläutert werden. Es zeigen:
- Fig.1: Längsschnitt durch eine erfindungsgemäße Vorrichtung;
- Fig.2: Vergrößerte Darstellung des Ausschnitts X aus Figur 1;
- Fig.3: Draufsicht auf die Formträgerplatte aus Sicht des Pfeils A in Figur 1 (ohne Formträgerplatte);
- Fig.4: Draufsicht auf die bewegliche Seite der Schließeinheit bei geöffneter Schließeinheit aus Sicht des Pfeils B in Figur 1;
- Fig.5: Darstellung der Schließeinheit mit Winkelfehler im Längsschnitt;
- Fig.6: Darstellung der Schließeinheit mit Achsversatz im Längsschnitt;
- Fig.7: Zweite Ausführungsform eines Vorspannmittels.

Das nachfolgend näher beschriebene Ausführungsbeispiel betrifft das Gebiet der Herstellung hochwertiger planparalleler Spritzgussartikel wie insbesondere Substrate für CD, DVD, und dergleichen. Die Anwendung der Erfindung ist jedoch nicht auf dieses technische Gebiet beschränkt. Vielmehr kann die erfindungsgemäße Vorrichtung bei der Herstellung beliebiger Formteile und bei allen Arten von Spritzgießmaschinen eingesetzt werden, und zwar sowohl bei Spritzgießmaschinen mit an Holmen geführten Schließeinheiten als auch bei holmlosen Spritzgießmaschinen.

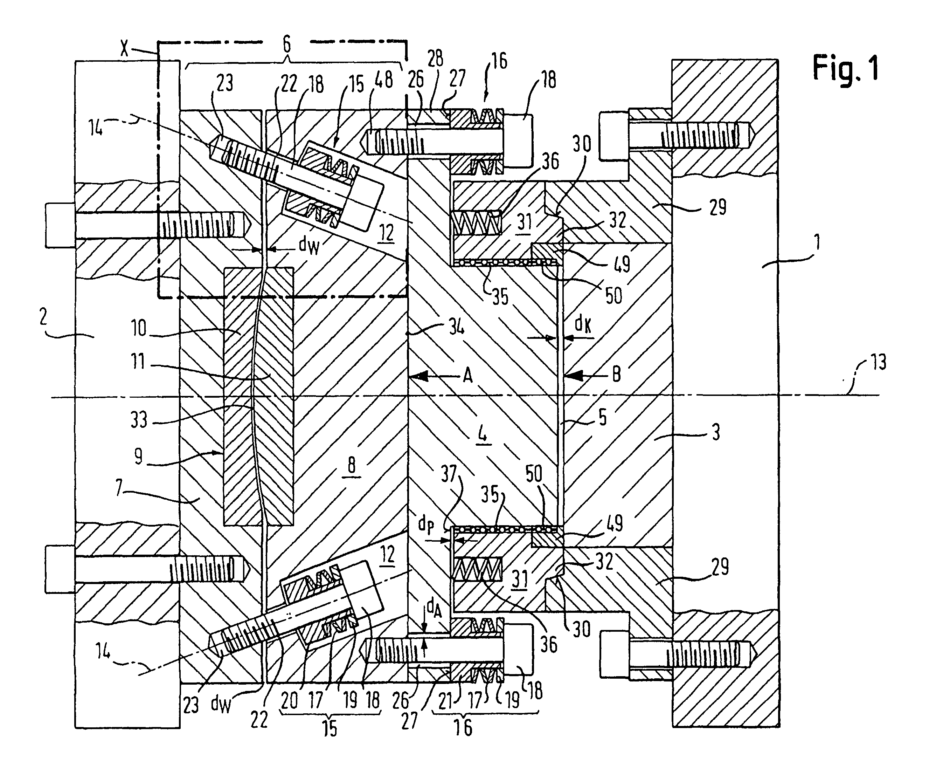

Gemäß den Figuren 1 bis 4 ist bei einer Spritzgießmaschine mit einer üblichen Schließeinheit zwischen einer festen Formaufspannplatte 1 und einer beweglichen Formaufspannplatte 2 ein Formwerkzeug (3,4) aufgespannt. Im geschlossenen Zustand - wie hier dargestellt - wird von den Formhälften 3 und 4 eine planparallele Kavität 5 mit dem Spaftmaß d_{K} zum Ausformen von Substraten für optisch lesbare Datenträger gebildet. Zwischen der beweglichen Formaufspannplatte 2 und der dieser zugeordneten Formhälfte 4 ist ein Winkelausgleichselement 6 angeordnet. Die Grundplatte 7 dieses Winkelausgleichselements 6 ist auf der beweglichen Formaufspannplatte 2 festgeschraubt und mit der Formträgerplatte 8 über ein Kalottenlager 9 gelenkig verbunden, wobei die Pfanne 10 des Kalottenlagers in die Grundplatte 7 und die Kugel 11 des Kalottenlagers in die Formträgerplatte 8 eingelassen sind, und zwar dergestalt, dass zwischen Grundplatte und Formträgerplatte ein Spalt d_{w} gebildet wird, der eine Drehung der Grundplatte 7 gegenüber der Formträgerplatte 8 erlaubt. Die Kugel 11 und/oder die Pfanne 10 sind mit einer geeigneten Gleitschicht versehen. Mehrere Langlöcher 12 sind symmetrisch um und schräg zur Symmetrieachse 13 der Schließeinheit in der Formträgerplatte 8 vorgesehen sind, wobei sich die Längsachsen 14 der Langlöcher 12 alle in einem Punkt auf der Symmetrieachse 13 der Schließeinheit schneiden. Die Langlöcher dienen zur Aufnahme der Federelemente 15 erster Art, mit denen die Formträgerplatte 8 gegen die Grundplatte 7 vorgespannt wird. Jedes Federelement 15 besteht aus einem Federpaket 17, das mittels einer Schraube 18 und einer Beilagscheibe 19 gegen Andrückelemente 20 gepresst wird. Die Schrauben 18 gehen durch Bohrungen 22 in der Formträgerplatte 8 hindurch und sind in passenden Gewindebohrungen 23 in der Grundplatte 7 eingeschraubt. Der Durchmesser der Bohrungen 22 ist etwas größer als der Durchmesser der Schrauben 18 und der Durchmesser der Langlöcher 12 ist etwas großer als der Außendurchmesser der Federpakte 17, so dass die Formträgerplatte 8 relativ zur Grundplatte 7 über die Kugel 11 in der Pfanne 10 geringfügig um die Spaltbreite d_{w} verdrehbar ist.

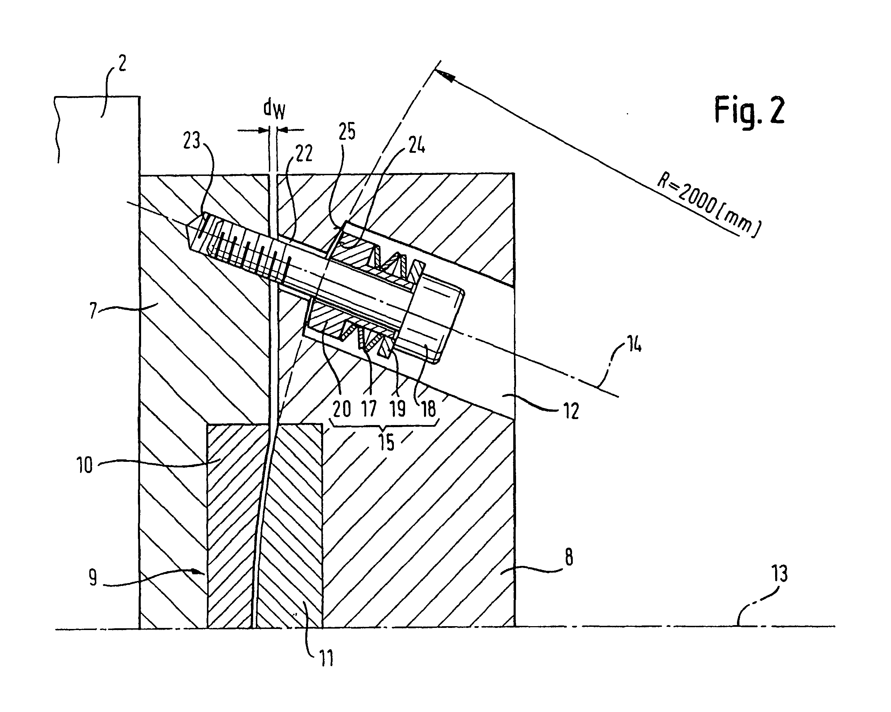

Wie aus der vergrößerten Darstellung gemäß Figur 2 zu sehen ist, ist das dem Federpaket 17 abgewandte Ende des Andrückelements 20 mit einer kalottenartigen Oberfläche 24 ausgebildet. Der Boden des Langlochs 12 weist eine passende kalottenartige Vertiefung 25 auf, deren Radius im wesentlichen gleich groß ist wie der Radius der kalottenartigen Oberfläche 24 des Andrückelements 20. In weiterer Ausgestaltung der Erfindung ist vorgesehen, dass die Radien von Kalottenlager 9, Oberfläche 24 und Vertiefung 25 im wesentlichen gleich groß sind. In vorteilhafter Ausgestaltung der Erfindung sind sämtliche Radien genau gleich groß. In weiterer vorteilhafter Weise liegen die kalottenartigen Andrückelemente 20 und die Kugel 11 des Kalottenlagers 9 im wesentlichen auf parallel zueinander liegenden Kalotten, vorzugsweise auf der gleichen Kalotte. Damit wird eine gleichmäßige Vorspannkraft selbst bei einer winkelversatzbedingten Schwenkbewegung der Formträgerplatte 8 sichergestellt. Im vorliegenden Ausführungsbeispiel liegen die kalottenartigen Andrückstücke 20, die Vertiefung 25 im Langloch 12, sowie die Kugel11 und die Pfanne 10 des Kalottenlagers 9 alle auf derselben Kalotte mit einem Radius von R=2000 mm.

Für die Befestigung der Formhälfte 4 auf der Formträgerplatte 8 sind weitere Federelemente 16 der oben beschriebenen Art symmetrisch um die Formhälfte 4 verteilt vorgesehen, wobei jedoch die einzelnen Bestandteile (Federpaket 17, Schraube 18, Beilagscheibe 19 und Andrückelement 21) anders ausgelegt werden können; insbesondere das Andrückelement 21 weist eine plane Andrückfläche 27 auf. Im Außenbereich 28 der Formhälfte 4 sind Bohrungen 26 symmetrisch über den Umfang vorgesehen, durch die die Schrauben 18 gehen und in passende Gewindebohrungen in der Formträgerplatte 8 eingeschraubt sind. Der Durchmesser der Bohrungen 26 ist um ein Spaltmaß 2d_{A} größer als der Durchmesser der Schrauben 18, damit sich die Formhälfte 4 gegenüber der Formträgerplatte 8 verschieben kann, um einen Achsversatz zwischen den Formhälften 4 und 3 auszugleichen. Die Trennebene 34 zwischen der Formträgerplatte 8 und der Formhälfte 4 ist mit einer geeigneten Gleitschicht versehen, so dass auf zusätzliche separate Gleitmittel verzichtet werden kann und dennoch ein problemloses Verschieben zwischen der Formträgerplatte 8 und der auf ihr vorgespannten Formhälfte 4 gesichert ist.

Anstelle einer durchgehend ebenen Trennebene 34 als Gleitflache kann auch ein mittlerer Teil der Formträgerplatte 8 gegenüber dem Außenbereich etwas vorstehend ausgebildet sein und in einer passenden Vertiefung auf der der Formträgeplatte 8 zugewandten Seite der Formhälfte 4 anliegen. Der Durchmesser dieser Vertiefung ist dabei so auszulegen, dass ein Spalt d_{A} zwischen dem Außenrand des vorstehenden Mittelteils der Formträgerplatte 8 und der Innenwand der Vertiefung der Formhälfte 4 gebildet wird, um den sich die Formhälfte 4 gegenüber Formträgerplatte 8 verschieben kann, um einen Achsversatz zwischen den Formhälften 4 und 3 auszugleichen.

Auf die Formhälfte 3 ist ferner ein erster Zentrierring 29 aufgezogen, in dessen konusförmige Vertiefung 30 ein passender Zentrierkonus 32 eines zweiten auf der festen Formhälfte 3 aufgezogenen Zentrierrings 31 eintauchen kann. Damit wird eine automatische Kompensation eines Winkelfehlers oder eines Achsversatzes sichergestellt. Bei einer Unparallelität von beweglicher und fester Formaufspannplatte wird die Form (3,4) durch das Zusammenspiel von Zentrierkonus 32 und konusförmiger Vertiefung 30 automatisch in der Trennebene 33 ausgerichtet, wobei sich die Kugel 11 in der Pfanne 10 in eine exakte Position dreht, in der der Zentrierkonus 32 exakt in der Vertiefung 30 sitzt. Das Spaltmaß d_{K} der Kavität 5 bleibt somit stets gleich. Aufgrund der Wärmeübertragung von der beheizten Plastifiziereinheit (ca. 300°C bis 400°C) auf die feste Formaufspannplatte 1 erfährt diese eine Wärmeausdehnung (im Gegensatz zu der beweglichen Formaufspannplatte 2). Daraus ergibt sich ein Achsversatz in der Schließeinheit, jedoch wird die Form (3,4) durch das Zusammenspiel der beiden Zentrierringe 29 und 31 automatisch in der Trennebene 34 verschoben und mittig ausgerichtet. Durch die Vorspannung der Federpakete 17 auf die Andrückelemente 20 und 21 wird die Form 3,4 in der ausgerichteten Position gehalten, solange sich die Schließeinheit nicht verändert. Sollte sich während der Produktion der Zustand der Schließeinheit ändern, z.B. durch Verschleiß, wird bei einem Winkelversatz die Formträgerplatte 8 durch die Zentrierringe 29 und 31 automatisch neu ausgerichtet. Analog wird ein eventuell auftretender neuer Achsversatz mittels der ineinandergreifenden Zentrierringe 29 und 31 durch automatische Verschiebung der Formhälfte 4 gegenüber der Formträgerplatte 8 erneut kompensiert. Die Vorspannung der Federpakete 17 muss so eingestellt werden, dass die Aufreißkräfte der Form kleiner sind als die Vorspannkraft und dass der Zentrierkonus 32 in der Lage ist, die Form (3,4) in den Trennebenen 33 und 34 ohne Verschleiß zu verschieben. Anstelle der hier dargestellten Version des Formteilkonus kann auch auf der beweglichen Formhälfte 4 der Zentrierung 31 mit dem vorstehenden Zentrierkonus 32 und auf der festen Formhälfte 3 der Zentrierring 29 mit der konusförmigen Vertiefung 30 aufgezogen sein.

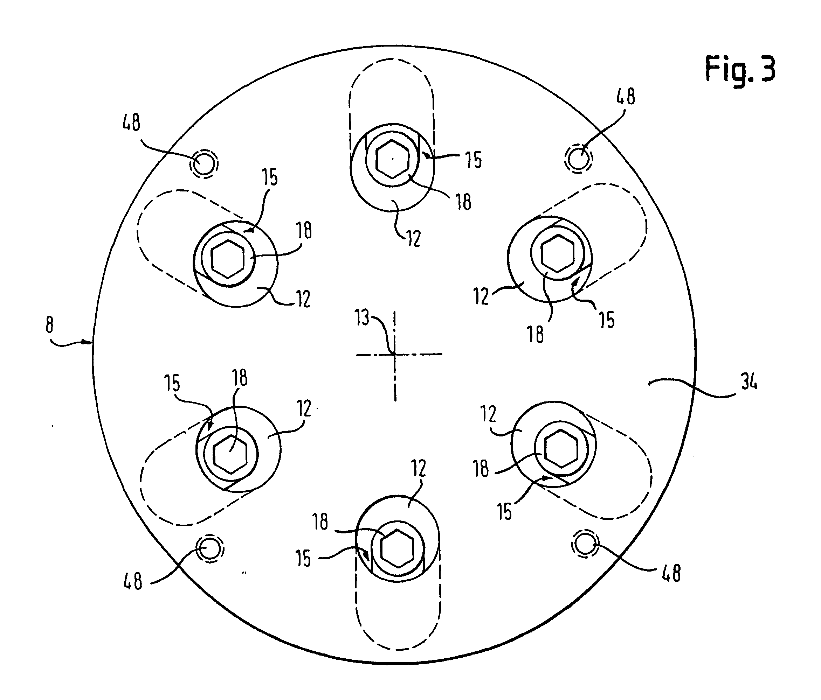

Figur 3 zeigt einen Schnitt in der Trennebene 34 und verdeutlicht die Anordnung der Vorspannmittel erster Art, mit der die Formträgerplatte 8 gegen die Grundplatte 7 vorgespannt sind. Im vorliegenden Ausführungsbeispiel sind sechs Federelemente 15 symmetrisch um die Symmetrieachse 13 der Schließeinheit angeordnet. Die Langlöcher 12 sind schräg zur Symmetrieachse 13 nach außen verlaufend angeordnet und enden im Innern der Formträgerplatte 8. Weiterhin sind vier Gewindebohrungen 48 vorgesehen, in die die Schrauben 18 des zweiten Federelements 16 zum Vorspannen der Formhälfte 4 eingeschraubt werden können.

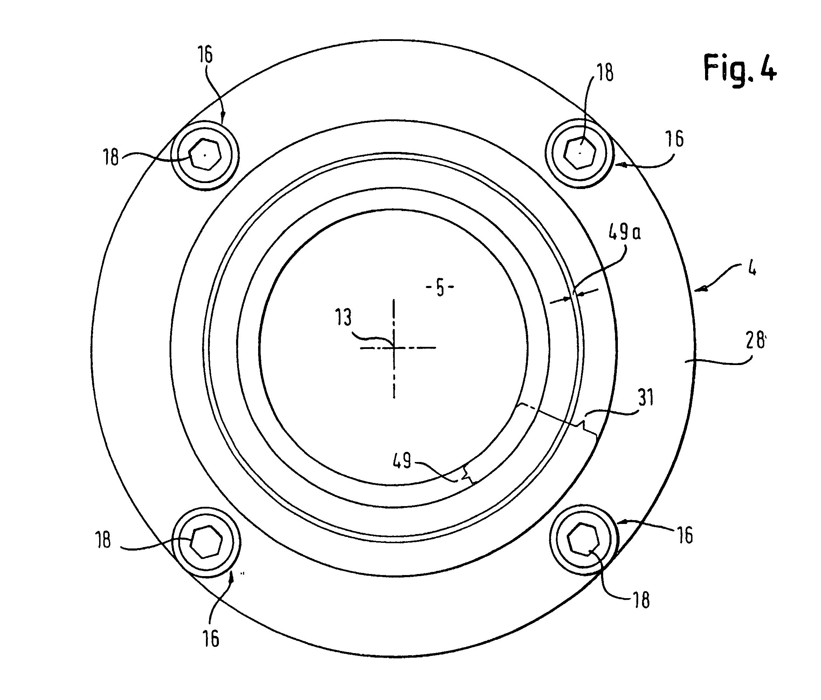

Figur 4 zeigt einen Schnitt durch die Formtrennebene und verdeutlicht die Anordnung der Vorspannmittel zweiter Art, mit der die bewegliche Formhälfte 4 gegen die Formträgerplatte 8 vorgespannt ist. Im vorliegenden Ausführungsbeispiel sind vier Federelemente 16 symmetrisch um die Symmetrieachse 13 der Schließeinheit angeordnet. Die Andrückelemente 21 mit einer ebenen Andrückfläche 27 werden mittels Federpaketen 17 gegen den Außenbereich 28 der Formhälfte 4 gepresst. Zur Einstellung der Federkraft gehen Schrauben 18 durch die Bohrungen 26 in dem Randbereich 28 der Formhälfte 4 und sind in passende Gewindebohrungen im Außenbereich der Formträgerplatte 8 eingeschraubt. Auf dem Zentrierring 31 mit dem Zentrierkonus 32, dessen projizierte Fläche 49a in Figur 4 zu sehen ist, sitzt im Bereich der Kavität 5 ein Formring 49 auf einem Kugelkäfig 50

Die Vorspannmittel erster und zweiter Art unterscheiden sich auf jeden Fall hinsichtlich der Andrückstücke (kalottenartiges Andrückstück 20 versus ebenes Andrückstück 21). Aber auch die übrigen Bestandteile können individuell und den jeweiligen Bedürfnissen entsprechend ausgelegt sein, insbesondere können Federpakete mit unterschiedlicher Federkonstanten verwendet werden.

In weiterer Ausgestaltung der Erfindung soll ein Spritzprägevorgang mit einem exakt reproduzierbaren Prägehub ausgeführt werden können. Hierzu ist vorgesehen, den Zentrierring 31 mittels eines vorgespannten Kugelkäfigs 35 spielfrei auf der Formhälfte 4 axial verschiebbar zu lagern. Der Kugelkäfig 35 überträgt die zur Formausrichtung nötigen Querkräfte. Der Prägehub dp wird über die Form (3,4) mittels Abstandshalter, beispielsweise mittels Hülsen geeigneter Länge, mechanisch fest eingestellt und mittels Federpaketen 36 wird der Zentrierring 31 in der durch die Abstandshalter vorgegebenen Position, nämlich im Abstand d_{P} von der Anschlagfläche 37 gehalten. Wenn sich die Formhälften soweit genähert haben, dass der Zentrierkonus 32 in die Vertiefung 30 des Zentrierrings 29 eintauchen kann, erfolgt zunächst eine Ausrichtung der Formhälften 3 und 4 zueinander. Hierzu ist es erforderlich, dass die Federkraft der Federpakte 36 größer ist als die zur Verstellung der beweglichen Formhälfte 4 erforderliche Kraft. Unmittelbar vor Ausführung des Prägehubs d_{P} befinden sich die Formhälften 3 und 4 im ausgerichteten Zustand, d.h. die Formhälften liegen absolut planparallel zueinander und die Symmetrieachsen der Formhälften 3 und 4 liegen absolut deckungsgleich. Anschließend wird die Schließeinheit um die Wegstrecke dp zugefahren und die Federpakete 36 zusammengedrückt, bis der Zentrierring an der Anschlagfläche 37 anliegt. Die Kavität 5 ist somit bei Prägebeginn und während des gesamten Prägeprozesses absolut parallel, so dass das Formteil höchste Anforderung an die Planparallelität erfüllen kann. Das Spaltmaß d_{K} der Kavität zu Beginn des Prägehubs entspricht der Summe aus Formteildicke d_{F} und Prägehub d_{P}.

Durch geeignete Gleitschichten zwischen den vorgespannten und sich relativ zueinander bewegten Teilen wird sichergestellt, dass beim Eintauchen des Zentrierkonus 32 in die konusförmige Vertiefung 30 des Zentrierrings 29 diese Teile leicht in die ausgerichtete Position bewegt werden können. Daher sind die Kugel 11 und/oder die Pfanne 10 des Kalottenlagers mit einer Gleitschicht ausgestattet. Auch zwischen der Formträgerplatte 8 und der Formhälfte 4 ist eine Gleitschicht vorgesehen. Gegebenenfalls können auch die Andrückstücke 20, 21 der Vorspannmittel mit einer Gleitschicht versehen werden.

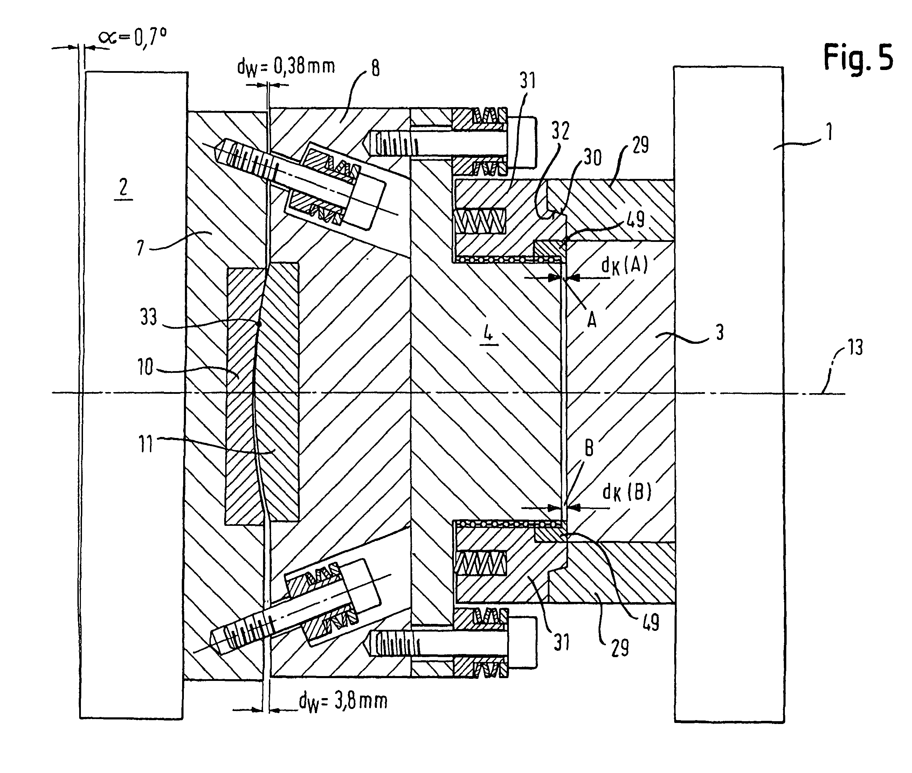

Figur 5 zeigt die Schließeinheit mit einem Winkelfehler, aber ohne Achsversatz. Die bewegliche Formaufspannplatte 2 ist um einen kleinen Winkel α aus der lotrechten Stellung verkippt. Damit ist auch die auf ihr aufgeschraubte Grundplatte 7 entsprechend verkippt. Durch den Schließvorgang und das Eintauchen des Zentrierkonus 32 in die konusförmige Vertiefung 30 ist die in die Formträgerplatte 8 eingelassene Kugel 11 in der Pfanne 10 so verdreht worden, dass die Formhälften 3 und 4 genau planparallel stehen. Die Formträgerplatte 8 und die auf ihr befestigte Formhälfte 4 sind also durch Drehung in der Trennebene 33 ausgerichtet worden. Dabei ist das Spaltmaß d_{w} auf der einen Seite auf 0,38 mm verkleinert und auf der anderen Seite auf 3,8 mm vergrößert worden. Das Kavitätenmaß d_{K} ist über die gesamte Breite der Kavität gleich geblieben, d.h. die Dicke der Kavität dₖ(A) an der Position A ist identisch groß wie die Dicke der Kavität dₖ(B) an der Position B.

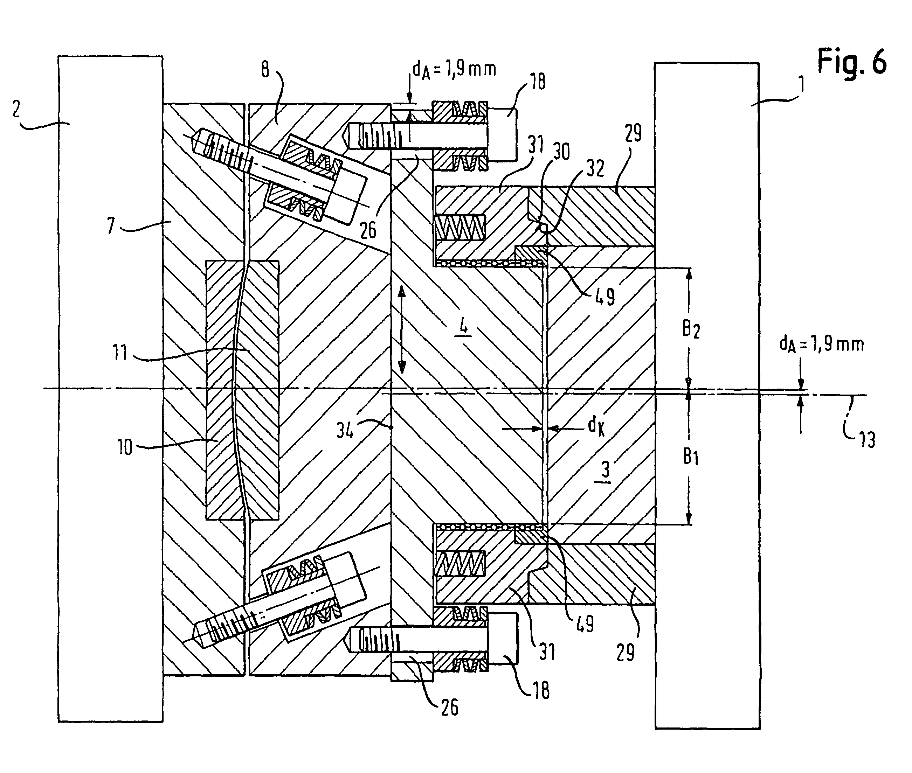

Figur 6 zeigt die Schließeinheit mit einem Achsversatz, aber ohne Winkelfehler. Die bewegliche Formaufspannplatte 2 ist zu Beginn der Schließbewegung um beispielsweise 1,9 mm aus der Symmetrieachse 13 versetzt. Beim Schließen taucht der Zentrierkonus 32 in die konusförmige Vertiefung 30 und verschiebt die Formhälfte 4 entlang der Trennebene 34 gegenüber der Formträgerplatte 8 um eben diesen Betrag. Die Schrauben 18 sitzen nun nicht mehr mittig in den Bohrungen 26 wie in Figur 1, sondern liegen fast am oberen Rand der Bohrungen 26 an. Damit bleibt die Kavität gleich (B₁=B₂) und zwischen den Formhälften 3 und 4 gibt es keinen Mittenversatz.

Liegen sowohl ein Winkelfehler als auch ein Achsversatz vor, so werden beim Eintauchen des Zentrierkonus 32 in die konusförmige Vertiefung 30 in der Trennebene 33 eine Drehbewegung und gleichzeitig in der Trennebene 34 eine Parallelverschiebung bewirkt.

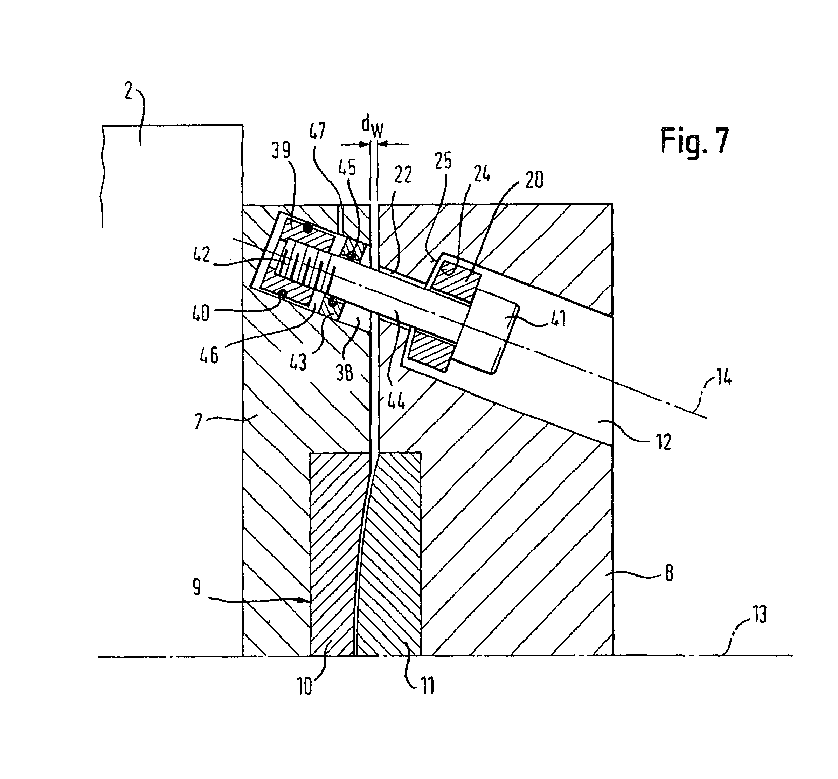

Figur 7 zeigt eine alternative Ausführungsform der Vorspannmittel mit hydraulisch oder pneumatisch beaufschlagbarer Kolben-Zylindereinheit. Die Grundplatte 7 weist ein Langloch 38 auf, das koaxial zu dem Langloch 12 in der Formträgerplatte 8 liegt. Das Andrückelement 20 wird in dem Langloch 12 von einem Bolzen 41 gegen die Andrückfläche 25 gedrückt Der Schaft 44 des Bolzens 41 geht durch die Bohrung 22, ragt in das Langloch 38 in der Grundplatte 7 und ist in einem das Langloch 38 abschließenden Ring 43 mittels eines oder mehrerer geeigneter Dichtringe 45 fluiddicht und verschiebbar gelagert. Auf das Fußstück 42 des Bolzens 41 ist ein Kolben 39 aufgeschraubt, der mittels einer oder mehrerer Dichtringe 40 dicht an der Innenwand des Langlochs 38 anliegt und darin reversierbar ist. Der Raum 46 zwischen dem Kolben 39 und dem Ring 43 kann über eine Leitung 47 mit einem Druckmedium beaufschlagt werden. Durch Einstellung eines geeigneten Drucks im Raum 46 wird der Bolzen 41 zusammen mit dem Andrückelement 20 mit der erforderlichen Vorspannkraft gegen die Andrückfläche 25 gedrückt.

### Bezugszeichenliste

- 1: feste Formaufspannplatte
- 2: bewegliche Formaufspannplatte
- 3: feste Formhälfte
- 4: bewegliche Formhälfte
- 5: Kavität
- 6: Ausgleichselement
- 7: Grundplatte
- 8: Formträgerplatte
- 9: Kalottenlager
- 10: Pfanne
- 11: Kugel
- 12: Langloch in Formträgerplatte 8
- 13: Symmetrieachse der Schließeinheit
- 14: Längsachse der Langlöcher
- 15: Federelement erster Art als Vorspannmittel erster Art
- 16: Federelement zweiter Art als Vorspannmittel zweiter Art
- 17: Federpaket
- 18: Schraube
- 19: Beilagscheibe
- 20: Andrückelement erster Art (kalottenartige Ausführung der Andrückfläche)
- 21: Andrückelement zweiter Art (ebene Ausführung der Andrückfläche)
- 22: Bohrung in Formträgerplatte 8
- 23: Gewindebohrung
- 24: Kalottenartige Oberfläche des Andrückelements 20
- 25: Kalottenartige Vertiefung im Boden des Langlochs 12
- 26: Bohrung im Außenbereich der Formhälfte 4
- 27: Plane Andrückfläche des Andrückelements 21
- 28: Außenbereich der Formhälfte 4
- 29: Erster Zentrierring
- 30: Konusförmige Vertiefung in erstem Zentrierring 29
- 31: Zweiter Zentrierring
- 32: Zentrierkonus des zweiten Zentrierrings 31
- 33: Erste Trennebene, für Winkelversatzkompensation
- 34: Zweite Trennebene; für Achsversatzkompensation
- 35: Kugelkäfig für Zentrierring 31
- 36: Federpakete des Zentrierrings 31
- 37: Anschlagfläche für Zentrierring 31 bei Spritzprägen
- 38: Langloch in Grundplatte 7
- 39: Kolben
- 40: Dichtring
- 41: Bolzen
- 42: Fußstück des Bolzens 41
- 43: Ring
- 44: Bolzenschaft
- 45: Dichtring
- 46: Druckbeaufschlagbarer Raum
- 47: Anschluss für Druckmedium
- 48: Gewindebohrung in Formträgerplatte 8
- 49: Formring
- 50: Kugelkäfig für Formring 49

## Patentansprüche

1. Vorrichtung zur automatischen und gleichzeitigen Kompensation eines Winkelfehlers und eines Achsversatzes bei einer Schließeinheit einer Spritzgießmaschine, mit einer beweglichen und einer festen Formaufspannplatte (1,2), mit einer auf einer der Formaufspannplatten (1,2) befestigbaren Grundplatte (7), und mit einer Formträgerplatte (8) zur Aufnahme der dieser Formaufspannplatte (1,2) zugeordneten Formhälfte (3,4) wobei die Formträgerplatte (8) gegenüber der Grundplatte (7) verkippbar und die Formhälfte (3,4) parallel zur Formträgerplatte (8) verschiebbar ist, wobei
die Grundplatte (7) mit der Formträgerplatte (8) über ein Kalottenlager (9) verbunden ist, derart, dass zwischen der Grundplatte (7) und der Formträgerplatte (8) ein Spalt d_{w} gegeben ist, dass die Formträgerplatte (8) mittels erster Vorspannmittel (15) gegenüber der Grundplatte (7) vorgespannt ist, wobei die der Formträgerplatte (8) zugeordnete Formhälfte (4) gegen die Formträgerplatte (8) mittels zweiter Vorspannmittel (16) vorgespannt ist, und auf der einen Formhälfte (3) ein erster Zentrierring (29) mit einer konusartigen Vertiefung (30) und auf der anderen Formhälfte (4) ein zweiter Zentrierring (31) mit einem Zentrierkonus (32) passend zu der genannten Vertiefung (30) vorgesehen sind.

2. Vorrichtung nach Anspruch 1,
**dadurch gekennzeichnet,**
**dass** die ersten Vorspannmittel (15) jeweils ein kalottenartiges Andruckstück (20) aufweisen.

3. Vorrichtung nach Anspruch 2,
**dadurch gekennzeichnet,**
**dass** in der Formträgerplatte (8) kalottenartige Vertiefungen (25) als Andrückfläche für die kalottenartigen Andrückstücke (20) vorgesehen sind

4. Vorrichtung nach Anspruch 2 oder 3,
**dadurch gekennzeichnet,**
**dass** die kalottenartigen Andrückstücke (20) und/oder die kalottenartigen Vertiefungen (25) im wesentlichen den gleichen Radius aufweisen wie die Kugel (11) oder die Pfanne (10) des Kalottenlagers (9).

5. Vorrichtung nach einem der Ansprüche 2 bis 4,
**dadurch gekennzeichnet,**
**dass** die ersten Vorspannmittel (15) mit ihrer Längsachse (14) derart schräg zur Symmetrieachse (13) der Schließeinheit ausgerichtet sind, dass die kalottenartigen Andrückstücke (20) und die Kugel (11) des Kalottenlagers (9) im wesentlichen auf parallel zueinander liegenden Kalotten, vorzugsweise auf der gleichen Kalotte, liegen.

6. Vorrichtung nach einem der Ansprüche 1 bis 5,
**dadurch gekennzeichnet,**
**dass** die ersten Vorspannmittel (15) in Langlöchern (12) in der Formträgerplatte (8) eingelassen sind.

7. Vorrichtung nach einem der Ansprüche 1 bis 6,
**dadurch gekennzeichnet,**
**dass** auf einer der Formhälften der Zentrierring in axialer Richtung verschiebbar ausgebildet ist, vorzugsweise durch einen auf die Formhälfte aufgezogenen Kugelkäfig (35).

8. Vorrichtung nach Anspruch 7,
**dadurch gekennzeichnet,**
**dass** der axial verschiebbare Zentrierring zusätzlich in axialer Richtung federnd gelagert ist, vorzugsweise mittels mehrerer Federpakete (36)

9. Vorrichtung nach Anspruch 7 oder 8,
**dadurch gekennzeichnet,**
**dass** der axial verschiebbare Zentrierung über ein oder mehrere mechanische Hubbegrenzer zur Begrenzung des axialen Verschiebeweges verfügt.

10. Vorrichtung nach einem der Ansprüche 1 bis 9,
**dadurch gekennzeichnet,**
**dass** als Vorspannmittel (15, 16) hydraulisch und/oder pneumatisch betätigbare Kolben-Zylinder-Einheiten vorgesehen sind.

11. Vorrichtung nach einem der Ansprüche 1 bis 9,
**dadurch gekennzeichnet,**
**dass** als Vorspannmittel (15, 16) Federelemente (17) vorgesehen sind, insbesondere Tellerfedern, Spiralfedern oder Gummifedern, die mit Haltemitteln (18), beispielsweise Schrauben, in der Grundplatte (7) befestigt sind, wobei die Haltemittel (18) durch Bohrungen (22) in der Formträgerplatte (7) hindurchgeführt und in der Grundplatte (7) befestigt sind, und wobei der Durchmesser der Bohrungen (22) geringfügig größer als der Durchmesser der Haltemittel (18) ist.

## Claims

1. A device for the automatic and simultaneous compensation of an angle error and axial misalignment in a closing unit of an injection moulding machine, having one moveable and one fixed mould-clamping plate (1, 2), having a base plate (8) fixable to one of the mould-clamping plates (1, 2), and having a mould-carrier plate (8) to accommodate the mould half (3, 4) associated with this mould-clamping plate (1, 2), wherein the mould-carrier plate (8) can be tilted in relation to the base plate (7) and the mould half (3, 4) is displaceable parallel to the mould-carrier plate (8),
wherein the base plate (7) is connected to the mould-carrier plate (8) via a cap-shaped bearing (9) in such a manner that between the base place (7) and the mould-carrier plate (8) a gap d_{w} is provided, that the mould-carrier plate (8) is pretensioned by means of first pretensioning means (15) in relation to the base plate (7), whereby the mould half (4) associated with the mould-carrier plate (8) is pretensioned against the mould-carrier plate (8) by means of second pretensioning means (16), and on the one mould half (3) a first centring ring (29) having a conical cavity (30) and on the other mould half (4) a second centring ring (31) having a centring cone (32) matching the said cavity (30) are provided.

2. A device according to Claim 1,
**characterised in that** the first prestressing means (15) in each case comprise a cap-shaped pressure piece (20).

3. A device according to Claim 2,
**characterised in that** cap-shaped cavities (25) are provided in the mould-carrier plate (8) as a pressure surface for the cap-shaped pressure pieces (20).

4. A device according to Claim 2 or 3,
**characterised in that** the cap-shaped pressure pieces (20) and/or the cap-shaped cavities (25) have substantially the same radius as the ball (11) or the socket (10) of the cap-shaped bearing (9).

5. A device according to one of Claims 2 to 4,
**characterised in that** the first pretensioning means (15) with their longitudinal axis (14) are aligned obliquely to the axis of symmetry (13) of the closing unit in such a manner that the cap-shaped pressure pieces (20) and the ball (11) of the cap-shaped bearing (9) lie substantially on mutually parallel caps, preferably on the same caps.

6. A device according to one of Claims 1 to 5,
**characterised in that** the first pretensioning means (15) are embedded in slots (12) in the mould-carrier plate (8).

7. A device according to one of Claims 1 to 6,
**characterised in that** on one of the mould halves the centring ring is displaceably constructed in the axial direction, preferably by a ball bearing retainer (35) pulled onto the mould half.

8. A device according to Claim 7,
**characterised in that** the axially displaceable centring ring is additionally spring-mounted in the axial direction, preferably by means of several spring assemblies (36).

9. A device according to Claim 7 or 8,
**characterised in that** the axially displaceable centring ring has one or more mechanical stroke-arresting devices to limit the axial displacement path.

10. A device according to one of Claims 1 to 9,
**characterised in that** hydraulically and/or pneumatically operated piston/cylinder units are provided as pretensioning means (15, 16).

11. A device according to one of Claims 1 to 9,
**characterised in that** spring elements (17), in particular cup springs, flat coil springs or rubber springs, which are fixed by retaining means (18), for example screws, in the base plate (7), are provided as pretensioning means (15, 16), the retaining means (18) being passed through bores (22) in the mould-carrier plate (7) and being fixed in the base plate (7), and the diameter of the bores (22) being slightly greater than the diameter of the retaining means (18).

## Revendications

1. Dispositif de compensation automatique et simultanée d'une erreur angulaire et d'un décalage d'axe dans une unité de fermeture d'une presse d'injection, comprenant des plateaux porte-outillage mobile et fixe (1, 2), présentant une plaque de base (7) pouvant être fixée sur un des plateaux porte-outillage (1, 2), et présentant une plaque de support de moule (8) destinée à recevoir les demi-moules (3, 4) associés à ce plateau porte-outillage (1, 2), la plaque de support de moule (8) pouvant basculer par rapport à la plaque de base (7) et le demi-moule (3, 4) étant mobile parallèlement à la plaque de support de moule (8), sachant que la plaque de base (7) est reliée à la plaque de support de moule (8) par l'intermédiaire d'un coussin de calotte sphérique (9) de telle sorte qu'entre la plaque de base (7) et la plaque de support de moule (8), un espace est prévu, que la plaque de support de moule (8) est prétendue par rapport à la plaque de base (7) à l'aide de premiers moyens de prétension (15), le demi-moule (4) associé à la plaque de support de moule (8) étant prétendu contre la plaque de support de moule (8) à l'aide de seconds moyens de prétension (16), et une première bague de centrage (29) comprenant un renfoncement (30) conique est prévue sur l'un des demi-moules (3) et une seconde bague de centrage (31) comprenant un cône de centrage (32) s'adaptant au renfoncement (30) cité est prévue sur l'autre demi-moule (4).

2. Dispositif selon la revendication 1, **caractérisé en ce que** les premiers moyens de prétension (15) comprennent respectivement une pièce de pression (20) en forme de calotte sphérique.

3. Dispositif selon la revendication 2, **caractérisé en ce que** des renfoncements (25) en forme de calotte sphérique sont prévus à titre de surface de pression pour les pièces de pression (20) en forme de calotte sphérique dans la plaque de support de moule (8).

4. Dispositif selon la revendication 2 ou 3, **caractérisé en ce que** les pièces de pression (20) en forme de calotte sphérique et/ou les renfoncements (25) en forme de calotte sphérique présentent sensiblement le même rayon que la bille (11) ou le coussinet (10) du coussin de calotte sphérique (9).

5. Dispositif selon l'une des revendications 2 à 4, **caractérisé en ce que** les premiers moyens de prétension (15) sont orientés avec leur axe longitudinal (14) de manière oblique par rapport à l'axe de symétrie (13) de l'unité de fermeture, de telle sorte que les pièces de pression (20) en forme de calotte sphérique et la bille (11) du coussin de calotte sphérique (9) se situent sensiblement sur des calottes sphériques parallèles les unes aux autres, de préférence sur la même calotte sphérique.

6. Dispositif selon l'une des revendications 1 à 5, **caractérisé en ce que** les premiers moyens de prétension (15) sont insérés dans des trous longitudinaux (12) à l'intérieur de la plaque de support de moule (8).

7. Dispositif selon l'une des revendications 1 à 6, **caractérisé en ce que** la bague de centrage est mobile dans le sens axial sur l'un des demi-moules, de préférence à travers une cage à billes (35) montée sur le demi-moule.

8. Dispositif selon la revendication 7, **caractérisé en ce que** la seconde bague de centrage mobile dans le sens axial est en outre logée de manière élastique dans le sens radial, de préférence à l'aide de plusieurs blocs-ressorts (36).

9. Dispositif selon la revendication 7 ou 8, **caractérisé en ce que** la bague de centrage mobile dans le sens axial dispose d'une ou de plusieurs butée(s) de fin de course mécanique(s) destinée(s) à limiter le déplacement axial.

10. Dispositif selon l'une des revendications 1 à 9, **caractérisé en ce que** des unités de vérin type à piston pouvant être actionnées de manière hydraulique et/ou pneumatique sont prévues à titre de moyens de prétension (15, 16).

11. Dispositif selon l'une des revendications 1 à 9, **caractérisé en ce que** des éléments formant ressort (17) sont prévus à titre de moyens de prétension (15, 16), en particulier des rondelles Belleville, des ressorts à spirale ou des ressorts en caoutchouc, qui sont fixés dans la plaque de base (7) à l'aide de moyens de retenue (18), par exemple des vis, les moyens de retenue (18) traversant des alésages (22) dans la plaque de support de moule (7) et étant fixés dans la plaque de base (7), et le diamètre des alésages (22) étant légèrement supérieur au diamètre des moyens de retenue (18).
